# EUROPEAN PATENT APPLICATION

(11) **EP 4 510 506 A1**
(43) Date of publication of application: **19.02.2025**
(21) Application number: 24183009.0
(22) Date of filing: 19.06.2024
(51) Int. Cl.: H04L 9/40, H04W 12/71, H04W 12/80, H04W 84/12, H04L 101/622

(54) **ENHANCED SERVICE FOR CONNECTED DEVICE**

(30) Priority: 18.08.2023 US 202318452093
(71) Applicant: Cujo LLC, Covina, CA 91723 (US)
(72) Inventor: Van Wie, Christopher, Covina, 91723 (US); Alam, Syed, Covina, 91723 (US); Bisikirskas, Justinas, 45257 Kaunas (LT); Povilavi ius, Karolis, 45257 Kaunas (LT); Janonis, Paulius, 45257 Kaunas (LT)
(74) Representative: TBK

(57) **Abstract**

One or more first device fingerprints are obtained (110) from one or more first wireless connections of a connected device in one or more first wireless networks. One or more second device fingerprints are obtained (124) from one or more second wireless connections of the connected device in one or more second wireless networks. In response to finding (134-YES) a match between the one or more first device fingerprints and the one or more second device fingerprints, an enhanced service is entitled (136) to the connected device.

## Description

### FIELD

The invention relates to a method, apparatus, computer program product, and a computer-readable medium.

### BACKGROUND

A connected device, such as a user mobile device, utilizes various types of networks to connect to the Internet. The access to the network may be tied to a subscription. A single user may have a plurality of subscriptions, which makes it more difficult to recognize the use of the subscriptions by a specific connected device. Furthermore, the device identification is impacted by an obfuscation of the connected device, which is a result of privacy enhancing techniques used by operating systems (OS) of connected devices such as iOS^{®}, Android^{®}, or Windows^{®}. In the so-called Media/Medium Access Control (MAC) address randomization technique, the original vendor-embedded MAC address is changed to a random value. As a result, it is difficult to detect whether the same single connected device has used the service of two different types of networks. If the detection of such a use is required in order to direct a specific action to the involved connected device, the action may not be performed due to the inability to detect such use. More sophistication is therefore required for the device identification when the connected device utilizes various types of networks.

### SUMMARY

According to an aspect of the disclosure, there is provided subject matter of independent claims.

One or more examples of implementations are set forth in more detail in the accompanying drawings and the detailed description.

### BRIEF DESCRIPTION OF DRAWINGS

Some examples will now be described with reference to the accompanying drawings, in which:
FIG. 1 is a flowchart illustrating examples of a method;
FIG. 2A and FIG. 2B are block diagrams illustrating example implementation environments for the method;
FIG. 3 is a block diagram illustrating further example implementation environments for the method;
FIG. 4 is a swimlane diagram illustrating further examples of the method;
FIG. 5A and FIG. 5B are block diagrams illustrating examples of a cybersecurity apparatus;
FIG. 6 is a block diagram illustrating an example of a connected device;
FIG. 7 is a block diagram illustrating an example of a computing resource; and
FIG. 8A and FIG. 8B are block diagrams illustrating examples of a customer-premises equipment.

### DETAILED DESCRIPTION

The following description discloses examples. Although the specification may refer to "an" example in several locations, this does not necessarily mean that each such reference is to the same example(s), or that the feature only applies to a single example. Single features of different examples may also be combined to provide other examples. Words "comprising" and "including" should be understood as not limiting the described examples to consist of only those features that have been mentioned as such examples may contain also features and structures that have not been specifically mentioned. The examples and features, if any, disclosed in the following description that do not fall under the scope of the independent claims should be interpreted as examples useful for understanding various examples and implementations of the invention.

Any flowcharts discussed herein are necessarily discussed in some sequence for purposes of illustration, but unless otherwise explicitly indicated, the examples are not limited to any particular sequence of steps. The use herein of ordinals in conjunction with an element is solely for distinguishing what might otherwise be similar or identical labels, such as "first message" and "second message," and does not imply an initial occurrence, a quantity, a priority, a type, an importance, or other attribute, unless otherwise stated herein. The term "about" used herein in conjunction with a numeric value means any value that is within a range of ten percent greater than or ten percent less than the numeric value. As used herein and in the claims, the articles "a" and "an" in reference to an element refers to "one or more" of the element unless otherwise explicitly specified. The word "or" as used herein and in the claims is inclusive unless contextually impossible. As an example, the recitation of A or B means A, or B, or both A and B. The word "data" may be used herein in the singular or plural depending on the context. The use of "and/or" between a phrase A and a phrase B, such as "A and/or B" means A alone, B alone, or A and B together.

A network service provider (NSP) may provide services in different types of networks, such as in mobile broadband connectivity networks, and in fixed broadband connectivity networks. Due to the obfuscation techniques such as the Media/Medium Access Control (MAC) randomization and the complexity of the network infrastructures, it may be difficult or impossible to recognize whether the connected device utilizes different types of networks. The solution is that one device fingerprint from one wireless connection of the connected device to one wireless network and another device fingerprint from another connection of the connected device to another wireless network are compared, and if a match is detected, it is determined that the connected device has used the one network and the other network, and thereby an action such as an entitlement for an enhanced service may be directed to the connected device.

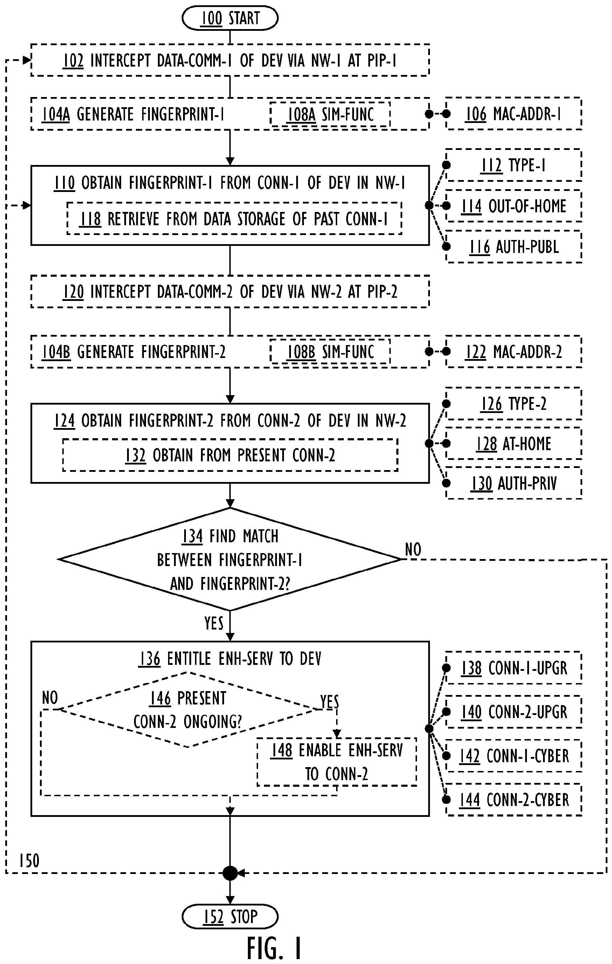

FIG. 1 illustrates a method. The method performs operations related to processing of device fingerprints. The device fingerprint may be defined as information collected about the software and/or hardware of a remote connected device to enable device identification. The information is distilled into a signature (numeric or alphanumeric string) of a predetermined length by a fingerprinting algorithm. The device fingerprint is unique so that is associated with a single connected device within accessed wireless networks, but it may also be globally unique. An example of a unique device identifier is a MAC address assigned to each connected device connected to the wireless network. The fingerprinting algorithm may hash the MAC address to generate the device fingerprint.

The method starts in 100 and ends in 152. The method may run in principle endlessly. The infinite running may be achieved by looping 150 back after an operation 136 to an operation 110 or to an operation 102 as shown in FIG. 1.

The operations are not strictly in chronological order in FIG. 1, i.e., no special order of operations is required, except where necessary due to the logical requirements for the processing order. In such a case, the synchronization between operations may either be explicitly indicated, or it may be understood implicitly by the skilled person. If no specific synchronization is required, some of the operations may be performed simultaneously or in an order differing from the illustrated order. Other operations may also be executed between the described operations or within the described operations, and other data besides the illustrated data may be exchanged between the operations.

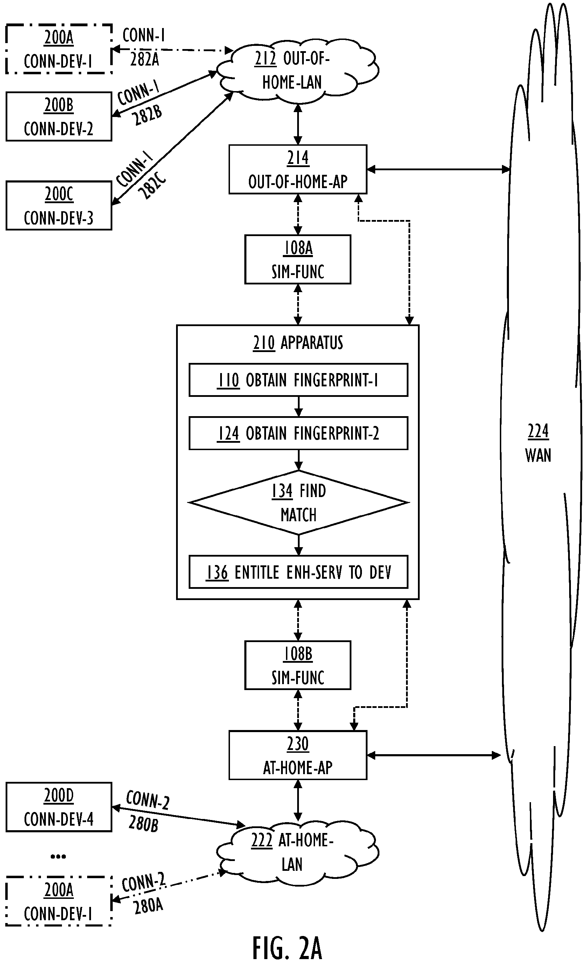

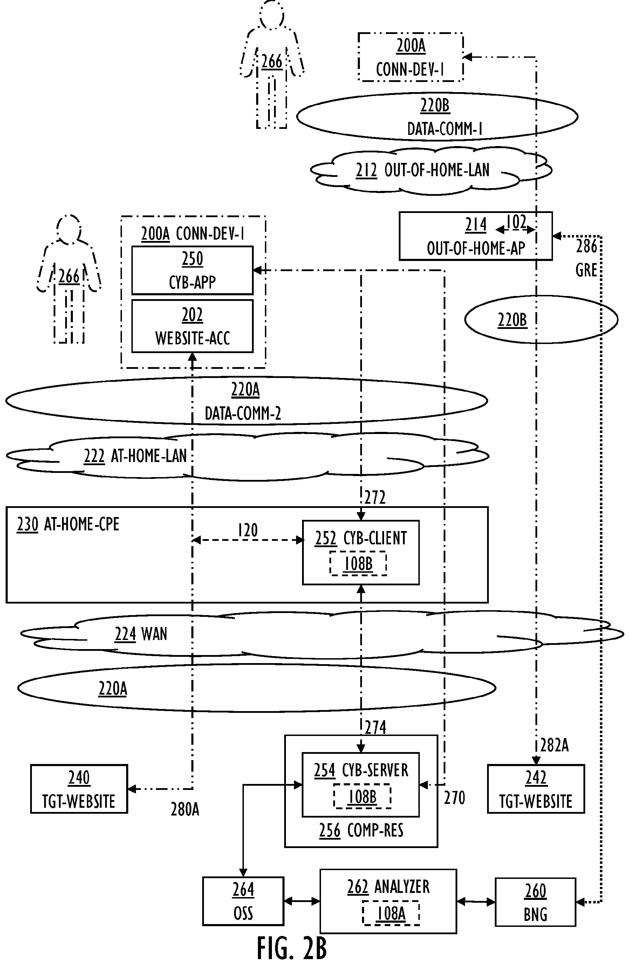

FIG. 2A and FIG. 2B illustrate an example implementation environment for the method. The method may be a computer-implemented method, executed in a single processing entity or distributed among a plurality of processing entities as will be explained later.

As used herein, the term "connected device" 200A, 200B, 200C, 200D refers to a physical device with communication capabilities configured to communicate alternatively via one or more first wireless networks 212 and one or more second wireless networks 222. The connected device 200A, 200B, 200C, 200D includes, but is not limited to, a user device, or another ubiquitous user computing device. In some use cases, the connected device 200A, 200B, 200C, 200D may be an Internet of Things (IoT) device, including, but not being limited to: a network-attached storage (NAS), a digital video recorder (DVR), an IP camera, a baby monitor, an audio-video device, or another portable device with processing ability, eventually sensors, and communication technology to connect to the one or more first wireless networks 212 and one or more second wireless networks 222.

One or more first device fingerprints are obtained 110 from one or more first wireless connections 282A of a connected device 200A in one or more first wireless networks 212. As shown in FIG. 2A and FIG. 2B, the connected device 200A is connected by the first wireless connection 282A in the first wireless network 212 provided by a first access point 214 during a first time period.

In an example, prior to the obtaining operation 110, a first data communication 220B of the connected device 200A via the one or more first wireless networks 212 is intercepted 102 at one or more first packet inspection points. As shown in FIG. 2A and FIG. 2B, the intercepting operation 102 may be performed for the first wireless connection 282A in the first wireless network 212 during the first time period at the first packet inspection point, which is in the first access point 214.

One or more second device fingerprints are obtained 124 from one or more second wireless connections 280A of the connected device 200A in one or more second wireless networks 222. As shown in FIG. 2A and FIG. 2B, the connected device 200A is connected by the second wireless 280A in the second wireless network 222 provided by a second access point 230 during a second time period.

The first time period and the second time period are not overlapping but occur successively, possibly with a pause between the first time period and the second time period. During the pause, the connected device 200A, while moving, may have another wireless connection in a cellular radio network (not illustrated) providing service via radio base stations, such as in a mobile cellular network.

In an example, prior to the obtaining operation 124, a second data communication 220A of the connected device 200A via the one or more second wireless networks 222 is intercepted 120 at one or more second packet inspection points. As shown in FIG. 2A and FIG. 2B, the intercepting operation 124 may be performed for the second wireless connection 280A in the second wireless network 222 during the second time period at the second packet inspection point, which is in the second access point 230.

Note that the order of the operations may be as shown in FIG. 1, 102-110-120-124, but the order may also be different, such as 120-124-102-110. Note also that the user of the connected device 200A may use one or more first wireless networks 222, and one or more second wireless networks 212 repeatedly so that the operations may be repeated numerous times in various combinations like:
- 102-110-102-110-120-124;
- 102-110-120-124-120-124;
- 120-124-102-110-102-110-120-124;
- etc.

The operations 110, 124 may be performed in real-time or near-real-time in relation to the interception operations 102, 120, but they may also be performed with another kind of timing, like periodically or on demand. The periodic or on demand operation may be such that the first and second packet inspection points operate in real-time for the intercepting 102, 120, but the resulting fingerprints are obtained with a delay (whose length depends on the periodicity or the frequency of the on-demand commands).

The one or more first device fingerprints and the one or more second device fingerprints may then be compared with each other in 134.

In response to finding 134-YES a match between the one or more first device fingerprints and the one or more second device fingerprints, an enhanced service is entitled 136 to the connected device 200A.

In an example use case, the first time period is in the past, and the second time period is happening in the present. The obtaining operation 124 is then implemented so that the second device fingerprint is obtained 132 from a present second wireless connection 280A of the connected device 200A in the second wireless network 222, and the obtaining 110 operation so that the one or more first device fingerprints are retrieved 118 from a data storage configured to store the one or more first device fingerprints obtained from past one or more first wireless connections 282A of the connected device 200A in the one or more first wireless networks 212. The entitling operation 136 is then implemented so that it comprises an additional test: in response to determining 146-YES that the present second wireless connection 280A is ongoing, the enhanced service is enabled 148 to the (ongoing) present second wireless connection 280A. If the present second wireless connection 280A is no more ongoing, then no action is performed.

In an example use case, the network service provider performs an automated and continuous filtered packet capture on its network path (= the second wireless network 212), which is only accessible by their branded mobile devices (= connected device 200A) as well as on their network path (= the first wireless network 222), which allows any device (= besides their branded mobile devices also non-branded mobile devices) to traverse. The result of the packet captures is then analyzed by the same function in order to generate the fingerprints, which relate to the protocol used, such as the multicast Doman Name System (mDNS) protocol. A single mobile device may have one or more unique fingerprints per filtered protocol analyzed. These generated fingerprints are then made available for the network service provider to store and then perform queries against, in order to link the connected device 200A seen on both wireless networks.

As used herein, the term "data communication" 220A, 220B refers to the transmission and/or reception of (digital) data by the connected device 200A along the first wireless network 212 and the second wireless network 222 to and from a wide area network (WAN) 224 such as the internet. The data communication 220A, 220B is transferred using digital data transmission units over a communication medium such as one or more communication channels (implemented by copper wires, optical fibers, and wireless communication using radio spectrum, for example) between the connected device 200A and another network node such as the target website 240, 242. The data are a collection of discrete values that convey information, or sequences of symbols that may be interpreted, expressed as a digital bitstream or a digitized analog signal, including, but not being limited to: text, numbers, image, audio, video, and multimedia. The data may be represented as an electromagnetic signal (such as an electrical voltage or a radio wave, for example). The digital transmission units may be transmitted individually, or in a series over a period of time, or in parallel over two or more communication channels, and include, but are not limited to: messages, protocol units, packets, and frames. One or more communication protocols may define a set of rules followed by the connected device 200A and other network nodes to implement the successful and reliable data communication 220A, 220B. The communication protocols may implement a protocol stack with different conceptual protocol layers. In a connection-oriented data communication 220A, 220B, a connection needs to be established for transferring the payload data. In a connectionless data communication 220A, 220B, the payload data is transferred over different paths with an independent routing.

The connected device 200A may create a connection 280A, 282A using a packet protocol for a website access application 202 of the connected device 200A to the target website 240, 242. The target website 240, 242 may host a server application enabling access by the website access application 202. The packet protocols include, but are not limited to, Transmission Control Protocol/Internet Protocol (TCP/IP), User Datagram Protocol/Internet Protocol (UDP/IP), and QUIC, which establishes a multiplexed transport on top of the UDP. Various Hypertext Transfer Protocol/Hypertext Transfer Protocol Secure (HTTP/HTTPS) requests may then be transferred in the connection 280A, 282A (using TCP streams or UDP datagrams, for example). In the Internet protocol suite, the connection 280A, 282A is operated in a link layer, an internet layer, and a transport layer, and the requests transmitted in the connection 280A, 282A are operated in an application layer.

The WAN such as the Internet 224 uses the Internet protocol suite including TCP/IP and UDP/IP to globally connect computer networks so that communication is enabled between connected devices 200A and various Internet services provided typically by the websites 240, 242. The Internet 224 comprises public networks, private networks, academic networks, business networks, government networks, etc. interlinked with various networking technologies. The various services provide access to vast World Wide Web (WWW) resources, wherein webpages may be written with Hypertext Markup Language (HTML) or Extensible Markup Language (XML) and accessed by the browser 202 or another application (such as a mobile app) running in the connected device 200A.

As used herein, the term "intercepting" refers to user-approved lawful interception or monitoring of the data communication 220A, 220B, with a purpose and goal of increasing cybersecurity related to the connected device 200A and its operating environment. As the data communication 220A, 220B is intercepted, the data communication 220A, 220B is accessed and collected between the transmitting device and the receiving device. The data communication 220A, 220B may be intercepted even if the digital data transmission units (such as messages or packets) in the data communication 220A, 220B are addressed to the receiving device. The intercepting may be implemented so that the data communication 220A, 220B is passively monitored, i.e., the data communication 220A, 220B is not affected by the intercepting. Alternatively, if needed, the intercepting may include a seizing of the data communication 220A, 220B, i.e., the data communication 220A, 220B is actively influenced so that a connection and/or requests and/or responses are blocked until it may be decided whether a cybersecurity action is required.

As shown in FIG. 2B, the connected device 200A is configured to execute the website access application 202, such as web user interface application (a web browser, for example), or a stand-alone application (a mobile app, for example), and as a result, the data communication 220A, 220B including network traffic 280A, 282A between the connected device 200A and an accessed website 240, 242 is caused. The website access application 202 may automatically cause the data communication 220A, 220B, or, alternatively, the data communication 220A, 220B may be generated as a result of an action by a user 266 through user interface controls of the website access application 202.

The data communication 220A may be intercepted at the second packet inspection point by a cybersecurity client 252 running in the second access point 230. The cybersecurity client 252 may operate independently, or the cybersecurity client 252 may be communicatively coupled 274 with a cybersecurity server 254 to perform the device fingerprint processing.

The data communication 220B may be intercepted at the first packet inspection point by the first access point 214. But the device fingerprint processing may be performed in another network element 260. The other network element 260 may be in a core network operated by the network service provider. As shown in FIG. 2B, the first access point 214 may capture relevant data from the data communication 220B and tunnel the captured data using a Generic Routing Encapsulation (GRE) protocol to the other network element 260. In an example, the other network element 260 may be a Broadband Network Gateway (BNG) operated by the network service provider. An additional network element or functionality, which may be called an analyzer 262 then performs the device fingerprinting process to obtain the one or more second device fingerprints. An operations support system (OSS) 264 of the network service provider may then either transmit the one or more second device fingerprints to the cybersecurity server 254 or receive the one or more first device fingerprints from the cybersecurity server 254. In this way, the apparatus 210 functionality described in FIG. 2A, is performed by the OSS 264 and/or the by cybersecurity server 254 to match 134 the device fingerprints 134 and eventually entitle 136 the enhanced service. Naturally, the cybersecurity server 254 and the OSS 264 may share the results as the enhanced service for the connected device 200A may be applied in one or both of the first and second wireless networks 212, 222.

The intercepted data communication 220A, 220B may be analyzed in order to perform a device identification procedure, by a cybersecurity client 252, possibly augmented by a cybersecurity server 254, or by a device intelligence client supported by a processing cloud (not illustrated in FIG. 2B). Machine learning algorithms may use a number of other data items (such as device-specific unique radio interface characteristics, and other active and historic unique identifiers related to the connected apparatus and its communication) to enable the device identification despite of the MAC randomization. Basically, the objective is to detect that the same connected device 200A may use an active MAC address, and one or more earlier MAC addresses. The device identification, which may be defined as a capability to detect and identify a connected device 200A in the first wireless network 212 and the second wireless network 222 increases cybersecurity, but the two separate device identifications may also be linked to each other to detect the same connected device 200A using two different types of networks.

Traditionally, the MAC address is assigned by a device manufacturer for the connected device 200A and used in the data communication (such as with wireless radio signals) 220A, 220B. The vendor-embedded MAC address may be an organizationally unique identifier (OUI). The OUI may be a 24-bit number used to identify the connected device 200A as manufactured by a specific vendor. The MAC randomization, which anonymizes and randomizes the MAC address to increase privacy, hinders the device identification based on the MAC address. In the MAC randomization, instead of using the vendor-embedded MAC address, or a randomized MAC address used for an initial registration to services in the customer-premises equipment (CPE) 230, the connected device transmits an active MAC address, which may be a randomized MAC address that is different from the earlier MAC address used for an initial registration to the services in the CPE 230. The device identification is described in various applications and patents by the applicant, incorporated herein by reference in all jurisdictions where applicable, such as in US 2022/0021670 A1, US 2022/0322089 A1, and US 11,528,189 B1.

The analysis of the intercepted data communication 220A, 220B may include collecting device traffic metadata and filtering relevant identification data points from network flow sent and received by the connected device 200A in the wireless networks 212, 222. In addition to the analysis of raw data, or as an alternative, refined data (such as metadata) such as datasets, markers, connection requests, etc. may be analyzed. A suitable network flow monitoring technology, such as Cisco^{®} NetFlow or alternative network flow monitoring technologies (which may be implemented as a service of the operating system of the access point 212, 230) may be used to intercept the data communication 220A, 220B. NetFlow, or its equivalents collect Internet Protocol (IP) network traffic as it enters or exits an interface (in the access points 214, 230), and based on the collected traffic, a source and a destination of the network traffic (in the form of IP addresses) within the data communication 220A, 220B may be determined. The second access point 230 (or more specifically the cybersecurity client 252 running on the second access point 230) sends the data points extracted from the data communication 220A (by the NetFlow, for example) to the cybersecurity server 254. The cybersecurity server 254 feeds the data points to an analysis engine, which analyses the extracted data points and provides a model matching device identifier for the connected device 200A based on the data points. The analysis engine is able to detect that the connected device 200A, even if it uses an obfuscated active MAC address, is in fact the connected device 200A that originally used an earlier MAC address. The active MAC address and the one or more earlier MAC addresses may be mapped to each other and stored in a database (or another data storage) of the cybersecurity server 254, and such mapped data may be passed back to a database (or other data storage, or even a cache) of the cybersecurity client 252.

In an example, a similar function 108A, 108B generates 104A, 104B both the one or more first device fingerprints and the one or more second device fingerprints so that they are comparable to each other. This implies that even though the first and second device fingerprints are generated based on wireless connections in two different wireless networks, the device fingerprints are similar in such a way that a meaningful comparison for a match is feasible. In a way, the first and second device fingerprints are compatible with each other. The similar function 108A, 108B may generate 104A the one or more first device fingerprints based at least partly on one or more first host MAC protocol addresses 106 transmitted by the connected device 200A on the one or more first wireless connections 282A, and generates 104B the one or more second device fingerprints based at least partly on one or more second host MAC protocol addresses 122 transmitted by the connected device 200A on the one or more second wireless connections 280A. The connected device 200A may transmit the host MAC in various protocols related to the one or more first wireless connections 282A and the one or second wireless connections 280A. The various protocols include, but are not limited to: Dynamic Host Configuration Protocol (DHCP), Domain Network System (DNS) protocol, Hypertext Transfer Protocol (HTTP), mDNS protocol, Neighbor Discovery Protocol (NDP), Simple Service Discovery Protocol (SSDP), and Transmission Control Protocol (TCP).

In an example, the one or more first wireless connections 282A and the one or more second wireless connections 280A may comprise zero-configuration (zeroconf) networking messages. Zeroconf refers to technologies enabling an automatic creation of a computer network based on the Internet Protocol suite without manual operator intervention or special configuration servers. Zeroconf performs an automatic assignment of numeric network addresses for connected devices, an automatic distribution and resolution of computer hostnames, and an automatic location of network services. The network messages of zeroconf include, but are not limited to, the following network protocols: mDNS messages, and DHCP messages.

In principle, the similar function 108A, 108B generates at least one unique device fingerprint derived from specific protocol delivered data. Instead of the host MAC address, another unique fingerprint derivable from the protocol delivered data may be used if available.

In an example, the enhanced service comprises an upgraded data transfer 138 for an ongoing or future one or more first wireless connections 282A of the connected device 200A to the one or more first wireless networks 212, and/or an upgraded data transfer 140 for an ongoing or future one or more second wireless connections 280A of the connected device 200A to the one or more second wireless networks 222. The upgraded data transfer 138 may cause that a data transfer rate in the wireless connection 280A and/or 282A is raised. This may be implemented so that an increased part of a limited radio interface capacity is given to the connected device 200A for the data communication 220A and/or 220B over the wireless connection 280A and/or 282A.

In an additional or alternative example, the enhanced service comprises a cybersecurity surveillance 142 for an ongoing or future one or more first wireless connections 282A of the connected device 200A to the one or more first wireless networks 212, and/or a cybersecurity surveillance 144 for an ongoing or future one or more second wireless connections 280A of the connected device 200A to the one or more second wireless networks 222. The cybersecurity surveillance 142 may be enabled for the wireless connection 280A and/or 282A, or a service level of an existing wireless connection 280A and/or 282A is improved (by adding functionality, for example).

From the cybersecurity point of view, the Internet 224 services may be divided between legitimate services and fraud services. Legitimate services operate according to moral and ethical standards enforced by law, police, or social pressure. Fraud services do not follow moral and ethical standards, and often perform criminal acts to disclose, steal or damage electronic data, software, or hardware, or disrupt or misdirect services provided by the electronic data, software, and hardware. Fraud services may be fraudulent to the core, i.e., their only reason for existence is to perform malicious acts, but they may also be legitimate services as such, but being infected with malicious software so as to enable criminal acts. The criminal acts in general include, but are not limited to using a backdoor to bypass security mechanisms, make a denial-of-service attack (DoS), also as a distributed denial-of-service (DDoS), installing software worms or keylogger, eavesdropping a communication, phishing, spoofing, tampering, installing malware, etc. Note that different service providers, such as network service providers, cloud service operators, and cybersecurity operators, just to name a few, may operate and/or manage the various network nodes shown in the FIG. 2B. The cybersecurity surveillance 142, 144 monitors and acts to combat and prevent fraud services for the connected device 200A. The cybersecurity surveillance 142 may also perform other tasks to protect users of the connected devices 200A, by implementing parental control for the connected device 200A of an underaged user 266, for example.

In an example, the one or more first wireless networks 212 comprise wireless non-cellular internet access networks of a first type 112, and the one or more second wireless networks 222 comprise wireless non-cellular internet access networks of a second type 126.

The type 112, 126 of the wireless network 212, 222 may be different based on an operation location of the wireless network 212, 222: out of a home or an office 114, or at the home or the office 128.

Each first wireless network 212 is accessed through the (first) access point 214 out of the home or the office 114.

The connected device 200A may access each first wireless network 212 using a public user authentication 116 controlled by a network service provider managing the access point 214 out of the home or the office 114. The public user authentication 116 may be configured in the connected device 200A so that if the second network 222 at the home or the office 128 is unavailable, the public user authentication is automatically performed to connect the connected device 200A to the first network 212 provided by the first access point 214. A network element controlled by the network service provider, either the first access point 214 or another network element in a network infrastructure coupled with the first access point 214, is configured to manage the public user authentication 116.

Each second wireless network 222 is accessed through an (second) access point 230 at the home or the office 128.

The connected device 200A may access each second wireless network 222 using a private user authentication 130 controlled by a user (such as the user 266 himself/herself) managing the access point 230 at the home or the office 128.

The access point 214 out of the home or the office 114 connects to the Internet 224 and provides wireless connections 282A, 282B, 282C in the wireless network 212 for the connected devices 200A, 200B, 200C to use the services accessible via the Internet 224. The access point 230 at the home or the office 128 connects to the Internet 224 and provides wireless connections 280A, 280B in the wireless network 222 for the connected devices 200A, 200D to use the services accessible via the Internet 224.

The access point 214 out of the home or the office 114 may operate the wireless network 212 as a hotspot serving the connected devices 200A, 200B, 200C in a public place such as a cafe, city center, shopping mall, airport, an arena, etc.

The access point 230 at the home or the office 128 may operate the wireless network 222 as a private access network serving the connected devices 200A, 200D in a private place such as in a residence or in an office space of a company or a community. The access point 230 of the home or the office 302 may also provide a first wireless connection 282D via a first wireless network 310 for the visiting connected device 200A, and a second wireless connection 280C via a second wireless network 314 for a resident connected device 200E. The access point 230, 312 may be a customer-premises equipment (CPE). As the CPE 230, 312 implements the wireless network 222, 314 for the data communication 220A of the connected device 200A, the CPE 230, 312 may intercept the data communication 220A.

The CPE 230, 312 is stationary equipment connected to a telecommunication circuit of a carrier (such as an NSP offering internet access using broadband or fixed wireless technologies) at a demarcation point. The demarcation point may be defined as a point at which the public Internet 224 ends and connects with the wireless network 222 at the home or the office 304. In this way, the CPE 230 acts as a network bridge, and/or a router.

The CPE 230 may include one or more functionalities of a router, a network switch, a residential gateway (RGW), a fixed mobile convergence product, a home networking adapter, an Internet access gateway, or another access product distributing the communication services locally in a residence or in an enterprise via the wireless network 212, 222 and thus enabling the user 266 of the connected device 200A to access communication services of the NSP, and the Internet 224. Note that the CPE 230, 312 may also be implemented with wireless technology, such as a 4G or 5G CPE 230 configured to exchange a 5G cellular radio network signal with the WAN 224 of a base station operated by the broadband service provider, and generate a Wi-Fi^{®} (or WLAN) or wired signal to implement the wireless network 212, 222 to provide access for the connected device 200A. The 4G/5G CPE 230, 312 also performs the conversion between the 4G/5G cellular radio network signal and the Wi-Fi^{®} or wired signal.

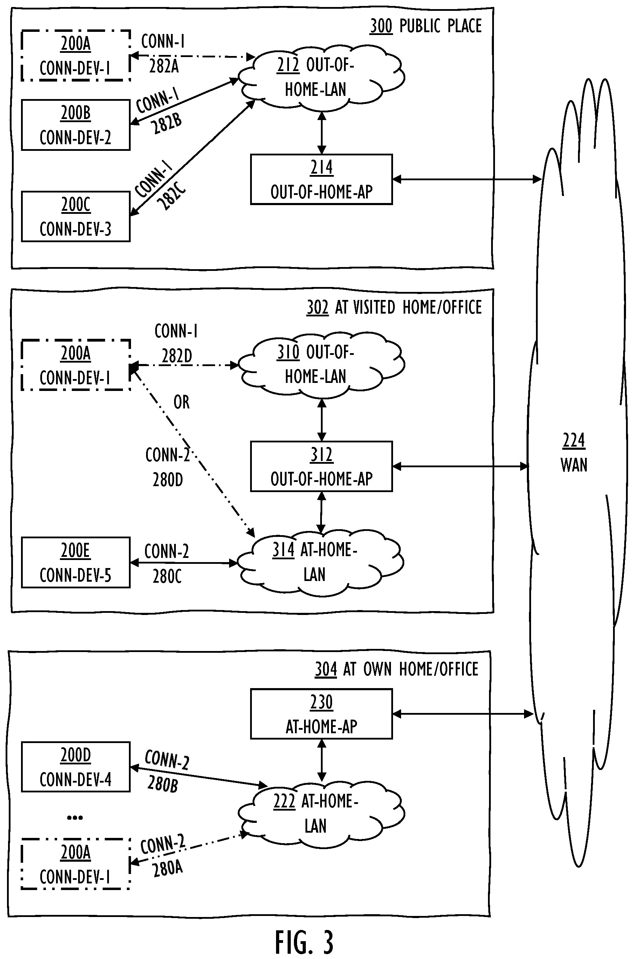

FIG. 3 is a block diagram illustrating various optional use cases related to the division between at the home or the office 128 and the out of the home or the office 114.

The user 266 of the connected device 200A may have at his/her own home or office 304 the second wireless network 222, which is then denoted as the at the home or the office 128 wireless network 222 provided by the second access point 230. The user 266 may then access 280A the second wireless network 222 with the connected device 200A using the private user authentication 130. Additional connected devices, such as a connected device 200D, operated by the user 266, or by another user, may also access 280B the second wireless network 222 using the private user authentication 130 (as instructed and authorized by the user 266).

The user 266 of the connected device 200A may visit a public place 300, and the connected device 200A detects the first wireless network 212, which is then denoted as the out of the home or the office 114 wireless network 212 provided by the first access point 230. The user 266 may then access 282A the first wireless network 212 with the connected device 200A using the public user authentication 116 controlled by the network service provider. Additional connected devices, such as connected devices 200B, 200C operated by the user 266, or by other users, may also access 282B, 282C the first wireless network 212 with the connected devices 200B, 200C using the public authentication 130.

The user 266 of the connected device 200A may visit a visited home or an office 302, wherein a special type of access point 312 may be in use. As observed from the point of view of the user 266, the access point 312 is out of the home or the office type. But for another user (not illustrated) using a connected device 200E, the visited home or the office is actually at the home or the office type, whereby the connected device 200E accesses 280C at the home or the office wireless network 314 provided by the access point 312 using the private user authentication (controlled by the user of the connected device 200E). The access point 312 also provides out of the home or the office wireless network 310, which the connected device 200A may access 282D using the public authentication controlled by the network service provider operating the access point 312. Alternatively, the connected device 200A may access 280D using the private authentication controlled by the user of the connected device 200E the at the home or the office wireless network 314.

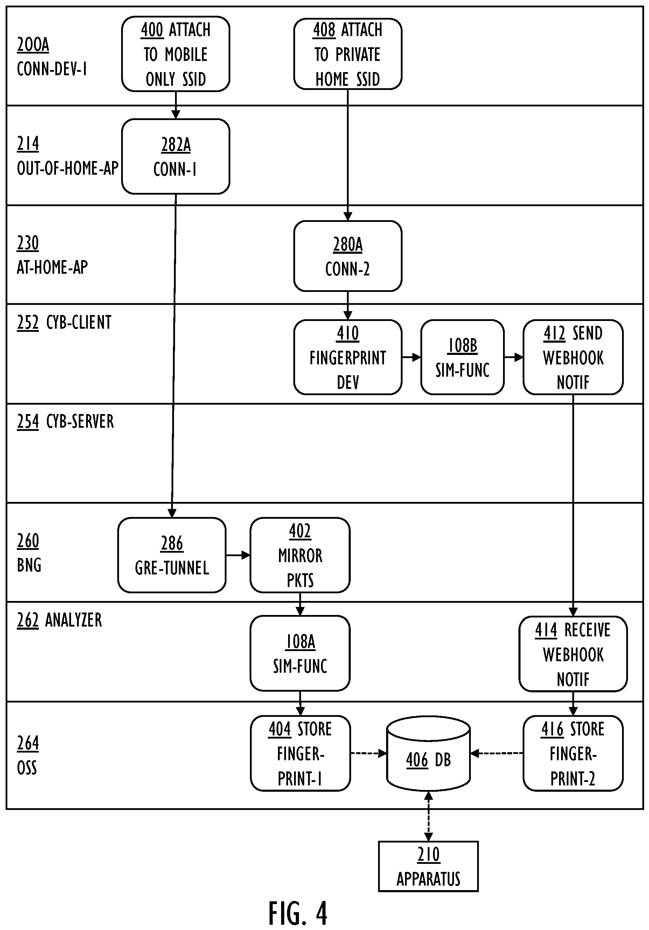

FIG. 4 is a swimlane diagram illustrating further examples of the method.

The connected device 200A attaches 400 to the first access point 214 identified by a mobile only Service Set Identifier (SSID), whereby the first wireless connection 282A is established. As explained earlier, certain captured data is transferred 286 using the GRE-tunnel from the first access point 214 to the BNG 260, which mirrors 402 the packets to the analyzer 262. The analyzer 262 generates the one or more first device fingerprints using the earlier explained similar function 108A, and the resulting one or more first device fingerprints are stored 404 in a data storage 406.

Later, the connected device 200A attaches 408 to the second access point 230 identified by a private home Service Set Identifier (SSID), whereby the second wireless connection 280A is established. As explained earlier, certain captured data is used for device fingerprinting 410 in the cybersecurity client 252: the one or more second device fingerprints are generated using the earlier explained similar function 108B, and the resulting one or more second device fingerprints are transmitted from the cybersecurity client 252 to the analyzer 262, which stores 416 the one second device fingerprints in the data storage 406. The transmission may be performed directly as shown in FIG. 4, using a webhook notification sending 412 and receiving 414, or another communication mechanism. Alternatively, the transmission may be performed in a centralized fashion, by the cybersecurity server 254 collecting the one or more second device fingerprints from a plurality of second access points 230. As illustrated in FIG. 2A, an apparatus 210 may then perform the processing 110-124-134-136 of the fingerprint data.

The device host MAC value may be hashed to generate the fingerprint (such as an mDNS signature) by the similar function 108A, 108B. The host MAC value may be broken into three parts. The host MAC value may be in a hexadecimal format having 12 digits and being 48 bits (= 6 bytes) long. For example, the host MAC value = d2 88 80 c4 17 66 is broken into three parts:
1. bytes 1 and 2 combined: d2
2. bytes 3, 4, 5, and 6: 8880
3. bytes 7, 8, 9, 10, 11, 12: c41766

The fingerprint is then constructed as follows using a Secure Hash Algorithm 3 with 256 bits hash or SHA3-256 (<byte 1 + byte2> + <byte 3 through 6> + <SHA-256 (byte 7 through 12)>.

Table 1 illustrates a simple example: five different fingerprints have been obtained, each having a running number ("id") and the fingerprint ("fingerprint"), and they have been generated by the similar function 108A, 108B, or by a generic operating system function. The field "received_from" may have a value "webhook", which indicates that the type of the fingerprint is the second device fingerprint, and "bng", which indicates that the type of the fingerprint is the first device fingerprint. Finally, a timestamp field ("timestamp") indicates the time of the generation, and may be used to detect whether the wireless connection is ongoing.

By comparing the fingerprint values ("fingerprint"), a match between the first device fingerprint with id = 1 and the second device fingerprint with id = 3 is found 134-YES, and an enhanced service may then be entitled 136 to the connected device 200A having used the protocols that generated the same fingerprints in two different wireless networks.

**Table 1: device fingerprints**

| id | fingerprint | method | received_from | timestamp |
|---|---|---|---|---|
| 1 | a8723e8caa754519b2db6 3c14716e237 | obf_v1 | webhook | 1681920005 |
| 3 | a8723e8caa754519b2db6 3c14716e237 | obf_v1 | bng | 1681949236 |
| 5 | 6decf4df4c774fe6aflcc24 a1de52ab8 | obf_v1 | bng | 1681954316 |
| 7 | 74a1b07768004c7c970b0 dc3aac2cff5 | ios_generic | webhook | 1681960126 |
| 9 | a8723e8caa754519b2db6 3c14716e237 | ios_generic | webhook | 1711960126 |

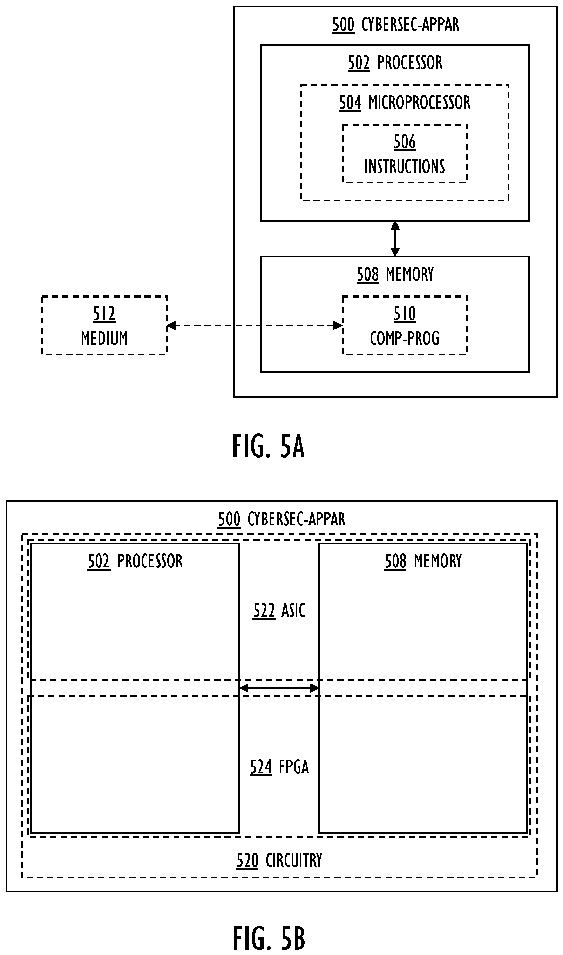

FIG. 5A and FIG. 5B illustrate examples of a cybersecurity apparatus 500. The method described with reference to FIG. 1 may be implemented partly by the cybersecurity apparatus 500 acting as the apparatus 210 of FIG. 2A, i.e., a part of the operations related to the processing of the device fingerprints are performed by the cybersecurity apparatus 500. The apparatus 500 may execute a part of the operations defined in the method. The apparatus 500 may implement an algorithm, which includes at least the part of the operations of the method, but may optionally include other operations related to the cybersecurity in general. Note that the method described with reference to FIG. 1 may be implemented as a part of the cybersecurity client 252 running in the second access point 230 as shown in FIG. 2B, or as a functionality embedded in the second access point 230. As shown in FIG. 2B, the cybersecurity apparatus 500 may comprise various distributed actors communicatively coupled 270, 272, 274 with each other. The cybersecurity apparatus 500 may even provide storage 406 for the device fingerprints.

The apparatus 500 comprises one or more memories 508, and one or more processors 502 coupled to the one or more memories 508 configured to execute the operations 120, 104B, 124, for example, described in FIG. 1.

The term "processor" 502 refers to a device that is capable of processing data. The term "memory" 508 refers to a device that is capable of storing data run-time (= working memory) or permanently (= non-volatile memory).

As shown in FIG. 5A, the one or more processors 502 may be implemented as one or more microprocessors 504, which are configured to execute instructions 506 of a computer program 510 stored on the one or memories 508. The microprocessor 504 implements functions of a central processing unit (CPU) on an integrated circuit. The CPU is a logic machine executing the instructions 506 of the computer program 510. The CPU may comprise a set of registers, an arithmetic logic unit (ALU), and a control unit (CU). The control unit is controlled by a sequence of the instructions 506 transferred to the CPU from the (working) memory 508. The control unit may contain a number of microinstructions for basic operations. The implementation of the microinstructions may vary, depending on the CPU design. The one or more microprocessors 504 may be implemented as cores of a single processor and/or as separate processors. Note that the term "microprocessor" is considered as a general term including, but not being limited to a digital signal processor (DSP), a digital signal controller, a graphics processing unit, a system on a chip, a microcontroller, a special-purpose computer chip, and other computing architectures employing at least partly microprocessor technology. The memory 508 comprising the working memory and the non-volatile memory may be implemented by a random-access memory (RAM), dynamic RAM (DRAM), static RAM (SRAM), a flash memory, a solid-state drive (SSD), PROM (programmable read-only memory), a suitable semiconductor, or any other means of implementing an electrical computer memory.

The computer program ("software") 510 may be written ("coded") by a suitable programming language, and the resulting executable code may be stored in the memory 508 and executed by the one or more microprocessors 504.

The computer program 510 implements the method/algorithm. The computer program 510 may be coded using a programming language, which may be a high-level programming language, such as Go, Java, C, or C++, or with a low-level programming language, such as an assembler or a machine language. The computer program 510 may be in source code form, object code form, executable file, or in some intermediate form, but for use in the one or more microprocessors 504 it is in an executable form as an application. There are many ways to structure the computer program 510: the operations may be divided into modules, subroutines, methods, classes, objects, applets, macros, etc., depending on the software design methodology and the programming language used. In modern programming environments, there are software libraries, i.e., compilations of ready-made functions, which may be utilized by the computer program 510 for performing a wide variety of standard operations. In addition, an operating system (such as a general-purpose operating system) may provide the computer program 510 with system services.

As shown in FIG. 5A, a computer-readable medium 512 may store the computer program 510, which, when executed by the apparatus 500 (the computer program 510 may first be loaded into the one or more microprocessors 504 as the instructions 506 and then executed by one or more microprocessors 504), causes the apparatus 500 (or the one or more microprocessors 504) to carry out the method/algorithm. The computer-readable medium 512 may be implemented as a non-transitory computer-readable storage medium, a computer-readable storage medium, a computer memory, a computer-readable data carrier (such as an electrical carrier signal), a data carrier signal (such as a wired or wireless telecommunications signal), or another software distribution medium capable of carrying the computer program 510 to the one or memories 508 of the apparatus 500. In some jurisdictions, depending on the legislation and the patent practice, the computer-readable medium 512 may not be the wired or wireless telecommunications signal.

As shown in FIG. 5B, the one or more processors 502 and the one or more memories 508 may be implemented by a circuitry 520. A non-exhaustive list of implementation techniques for the circuitry 520 includes, but is not limited to application-specific integrated circuits (ASIC) 522, field-programmable gate arrays (FPGA) 524, application-specific standard products (ASSP), standard integrated circuits, logic components, and other electronics structures employing custom-made or standard electronic circuits.

Note that in modern computing environments a hybrid implementation employing both the microprocessor technology of FIG. 5A and the custom or standard circuitry of FIG. 5B is feasible.

Functionality of the apparatus 500, including the capability to carry out the method/algorithm, may be implemented in a centralized fashion by a stand-alone single physical unit, or alternatively in a distributed fashion using more than one communicatively coupled physical units. The physical unit may be a computer, or another type of a general-purpose off-the-shelf computing device, as opposed to a purpose-build proprietary equipment, whereby research and development costs will be lower as only the special-purpose software (and necessarily not the hardware) needs to be designed, implemented, tested, and produced. However, if highly optimized performance is required, the physical unit may be implemented with proprietary or standard circuitry as described earlier.

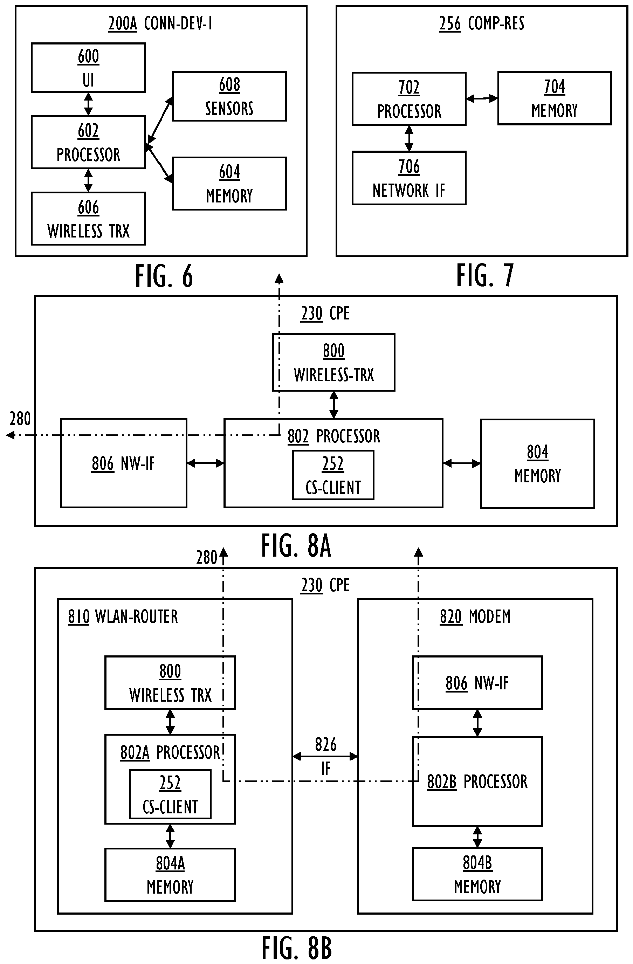

FIG. 6 is a block diagram illustrating an example of the connected device 200A. The connected device 200A may be a terminal, a user equipment (UE), a radio terminal, a subscriber terminal, a smartphone, a mobile station, a mobile phone, a desktop computer, a portable computer, a laptop computer, a tablet computer, a smartwatch, smartglasses, an IoT device, or some other type of a wired or wireless mobile or stationary communication device operating with or without a subscriber identification module (SIM) or an embedded SIM (eSIM). The user apparatus 200A may be a personal communication device of the user 266.

As shown in FIG. 6, the connected device 200A comprises one or more memories 604, and one or more processors 602 coupled to the one or more memories 604 configured to carry out a functionality of the connected device 200A. In addition, the connected device 200A comprises a user interface 600 (such as a touch screen or one or more LEDs), and one or more wireless transceivers 606 (such as a WLAN transceiver, a cellular radio network transceiver, and a short-range radio transceiver), and also one or more sensors 608. As shown in FIG. 2B, the connected device 200A may be running a cybersecurity application 250.

FIG. 7 is a block diagram illustrating an example of a computing resource 256 such as a server apparatus. The server apparatus 256 may be a networked computer server, which interoperates with the second access point 230 according to a client-server architecture, a cloud computing architecture, a peer-to-peer system, or another applicable distributed computing architecture. As shown in FIG. 7, the server apparatus 256 comprises one or more memories 704, and one or more processors 702 coupled to the one or more memories 704 configured to carry out a part of the method/algorithm. In addition, the server apparatus 256 comprises a network interface (such as an Ethernet network interface card) 706 configured to couple the server apparatus 256 to the Internet 224. As shown in FIG. 4, the computing resource 256 may be running a cybersecurity application 254, such as a cybersecurity server application 254.

FIG. 8A and FIG. 8B are block diagrams illustrating examples of a customer-premises equipment 230. Even though the description mainly applies to the second access point 230, similar functionalities and structures may be implemented in the first access point 214.

In FIG. 8A, the CPE 230 is an integrated apparatus comprising one or more memories 804, and one or more processors 802 coupled to the one or more memories 804 configured to carry out the functionality of the CPE 230, and possibly a part of the method/algorithm. Additionally, the CPE 230 comprises a wireless radio transceiver 800 configured to create the wireless network 222 for enabling access by the connected device 200A. The CPE 230 also comprises a network interface 806 to act as a modem configured to connect to the telecommunication circuit of the carrier at the demarcation point, i.e., to the WAN 224. The network interface 806 may operate as a Digital Subscriber Line (DSL) modem using different variants such as Very high bitrate DSL (VDSL), Symmetric DSL (SDSL), or Asymmetric DSL (ADSL). The network interface 806 may also operate using alternative wired or even wireless access technologies including, but not being limited to: the Data Over Cable Service Interface Specification (DOCSIS), the Gigabit-capable Passive Optical Network (GPON), the Multimedia over Coax Alliance (MoCA^{®}), the Multimedia Terminal Adapter (MTA), and the fourth generation (4G), fifth generation (5G), or even a higher generation cellular radio network access technology. As shown in FIG. 4, the CPE 230 may be running a cybersecurity client 252.

In FIG. 8B, the CPE 230 is a two-part apparatus. A WLAN router part 810 comprises the one or more memories 804A, the one or more processors 802A coupled to the one or more memories 804A configured to carry out the functionality of the WLAN router 810 and possibly a part of the method/algorithm, and the wireless transceiver 800 to create the wireless network 222 for enabling access by the connected device 200A. A modem part 820 comprises the one or more processors 802B coupled to one or more memories 804B configured to carry out modem operations, and the network interface 806 to act as the modem configured to connect to the WAN 224. The WLAN router part 810 may be purchased by the user 266 of the connected device 200A to gain access to the method/algorithm, whereas the modem part 820 may be provided by a carrier providing the telecommunication circuit access. As shown in FIG. 8B, the WLAN router part 810 and the modem part 820 may be communicatively coupled by an interface 826 (such as a wired Ethernet interface). As shown in FIG. 8B, the platform may be provided by the one or more memories 804A, and the one or more processors 802A, but also additionally, or alternatively, by the one or more memories 804B, and the one or more processors 802B.

Instead of the cybersecurity client 252 illustrated in FIG. 8A and FIG. 8B, another component running on the CPE 230 may be configured to run an algorithm implementing the method of FIG. 1.

The CPE 230 may be implemented using proprietary software or using at least partly open software development kits. In an example, the Reference Design Kit for Broadband (RDK-B) may be used, but the implementation is not limited to that as it may be implemented in other applicable environments as well. At the time of writing of this patent application, more information regarding the RDK may be found in wiki.rdkcentral.com. Another alternative implementation environment is Open Wireless Router (OpenWrt^{®}), which is an open-source project for embedded operating systems of the CPE 230 based also on Linux. At the time of writing of this patent application, more information regarding the OpenWrt^{®} may be found in openwrt.org. In general, the CPE 230 may be configured to implement the platform for services in the middleware (such as the RDK-B or the OpenWrt^{®}) of the CPE 230.

As illustrated in FIG. 2A, the functionality of the device fingerprint processing may be implemented in a centralized fashion by a stand-alone single physical unit 210, or alternatively in a distributed fashion using more than one communicatively coupled physical units 214, 230, 256, 260, 262, 264.

As can be understood by the person skilled in the art, the method/algorithm operations may in part be distributed among the distributed software comprising the cybersecurity client 252, and the cybersecurity server 254 in different configurations. In an example, the cybersecurity client 252 communicates 274 with the cybersecurity server 254 to implement the method/algorithm functionality.

Thus, the cybersecurity client 252 may comprise a stand-alone fashion to carry out the method/algorithm, or a part of the functionality augmented by the functionality of the cybersecurity server 254. The cybersecurity client 252 may operate as a frontend with a relatively limited resources as regards to the processor and memory, whereas the cybersecurity server 254 may operate as a backend with a relatively unlimited resources as regards to the processor and memory, and the capability to serve a very large number of the connected devices 200A simultaneously.

Even though the invention has been described with reference to one or more examples according to the accompanying drawings, it is clear that the invention is not restricted thereto but can be modified in several ways within the scope of the appended claims. All words and expressions should be interpreted broadly, and they are intended to illustrate, not to restrict, the examples. As technology advances, the inventive concept defined by the claims can be implemented in various ways.

## Claims

1. A computer-implemented method comprising:
obtaining (110) one or more first device fingerprints from one or more first wireless connections of a connected device in one or more first wireless networks;
obtaining (124) one or more second device fingerprints from one or more second wireless connections of the connected device in one or more second wireless networks; and
in response to finding (134-YES) a match between the one or more first device fingerprints and the one or more second device fingerprints, entitling (136) an enhanced service to the connected device.

2. The method of claim 1, wherein the one or more first wireless networks comprise wireless non-cellular internet access networks of a first type (112), and the one or more second wireless networks comprise wireless non-cellular internet access networks of a second type (126).

3. The method of any preceding claim, wherein each first wireless network is provided by an access point (114) out of a home or an office.

4. The method of claim 3, wherein the connected device accesses each first wireless network using a public user authentication (116) controlled by a network service provider managing the access point out of the home or the office.

5. The method of any preceding claim, wherein each second wireless network is provided by an access point (128) at a home or an office.

6. The method of claim 5, wherein the connected device accesses each second wireless network using a private user authentication (130) controlled by a user managing the access point at the home or the office.

7. The method of any preceding claim, wherein the method further comprises, prior to obtaining (110) the one or more first device fingerprints from the one or more first wireless connections of the connected device in the one or more first wireless networks:
intercepting (102) a first data communication of the connected device via the one or more first wireless networks at one or more first packet inspection points.

8. The method of any preceding claim, wherein the method further comprises, prior to obtaining (124) the one or more second device fingerprints from the one or more second wireless connections of the connected device in the one or more second wireless networks:
intercepting (120) a second data communication of the connected device via the one or more second wireless networks at one or more second packet inspection points.

9. The method of any preceding claim, wherein a similar function (108A, 108B) generates both the one or more first device fingerprints and the one or more second device fingerprints so that they are comparable to each other.

10. The method of claim 9, wherein the similar function (108A, 108B) generates (104A) the one or more first device fingerprints based at least partly on one or more first host media access control protocol addresses transmitted by the connected device on the one or more first wireless connections, and generates (104B) the one or more second device fingerprints based at least partly on one or more second host media access control protocol addresses transmitted by the connected device on the one or more second wireless connections.

11. The method of any preceding claim, wherein the enhanced service comprises an upgraded data transfer (138) for an ongoing or future one or more first wireless connections of the connected device in the one or more first wireless networks, and/or an upgraded data transfer (140) for an ongoing or future one or more second wireless connections of the connected device in the one or more second wireless networks.

12. The method of any preceding claim, wherein the enhanced service comprises a cybersecurity surveillance (142) for an ongoing or future one or more first wireless connections of the connected device in the one or more first wireless networks, and/or a cybersecurity surveillance (144) for an ongoing or future one or more second wireless connections of the connected device in the one or more second wireless networks.

13. The method of any preceding claim, wherein obtaining (124) the one or more second device fingerprints from the one or more second wireless connections of the connected device in the one or more second wireless networks further comprises:
obtaining (132) the second device fingerprint from a present second wireless connection of the connected device in the second wireless network;
wherein obtaining (110) the one or more first device fingerprints from the one or more first wireless connections of the connected device in the one or more first wireless networks further comprises:
retrieving (118) the one or more first device fingerprints from a data storage configured to store the one or more first device fingerprints obtained from past one or more first wireless connections of the connected device in the one or more first wireless networks; and
wherein entitling (136) the enhanced service to the connected device further comprises:
in response to determining (146-YES) that the present second wireless connection is ongoing, enabling (148) the enhanced service to the present second wireless connection.

14. An apparatus comprising means for carrying out the method of any preceding claim 1-13.

15. A computer program product comprising instructions which, when executed by an apparatus, cause the apparatus to carry out the method of any preceding claim 1-13.

16. A computer-readable medium comprising a computer program with instructions which, when executed by an apparatus, cause the apparatus to carry out the method of any preceding claim 1-13.
